# EUROPEAN PATENT APPLICATION

(11) **EP 1 696 309 A2**
(43) Date of publication of application: **30.08.2006**
(21) Application number: 06110288.5
(22) Date of filing: 22.02.2006
(51) Int. Cl.: G06F 3/06

(54) **Computer and disk management method for computer**

(30) Priority: 25.02.2005 JP 2005051014
(71) Applicant: KABUSHIKI KAISHA TOSHIBA, Tokyo (JP)
(72) Inventor: Kanbe, Yuki, Tokyo 105-8001 (JP); Abe, Tomonori, Tokyo 105-8001 (JP)
(74) Representative: Henkel, Feiler & Hänzel

(57) **Abstract**

According to one embodiment, a computer includes : a plurality of hard disk drives; a RAID driver that configures a PAID system using the hard disk drives; and a disk managing unit that manages the hard disk drives by partitioning a storage area of each of the hard disk drives into a first storage area where the RAID system is configured under control of the RAID driver and a second storage area where the RAID system is unconfigured.

## Description

### CROSS-REFERENCE TO RELATED APPLICATIONS

This application is based upon and claims the benefit of priority from Japanese Patent Application No. 2005-051014, filed on February 25, 2005, the entire contents of which are incorporated herein by reference.

### BACKGROUND

### 1. Field

One embodiment of the invention relates to a disk management technique which is suitably applied to, for example, a personal computer of a notebook type or a desktop type.

### 2. Description of the Related Art

Recently, a wide variety of personal computers of a notebook type or a desktop type are widely used. A technique of reducing the size of and increasing the capacity of a hard disk drive which is mounted on such a personal computer is advancing day to day. Even a portable personal computer which can be driven by a battery can hold an appreciable amount of data although the computer body is thin.

When an appreciable amount of data can be held, for example, the use of a portable personal computer as a tool for data management in addition to that for data processing seems to become popular. In this case, durability of data against a failure of a hard disk drive is a key issue.

As a technique of enhancing durability of data against a failure of a hard disk drive, a RAID (redundant array of inexpensive disks) is well known. In a RAID, plural hard disk drives are controlled as if the drives are configured by one hard disk drive, and, for example, the mirroring process is performed to enhance the fault tolerance of data.

When, for example, two hard disk drives are mounted on a personal computer and a RAID is configured with using the two hard disk drives, the fault tolerance of data can be enhanced. Therefore, even a portable personal computer which has the possibility of receiving an impact can safely hold important data.

As a technique of applying a RAID to a personal computer, for example, the following technique has been proposed. When it is detected that a hard disk drive in which logical drive configuration information corresponding to array information is not recorded is mounted, logical drive configuration information is recorded in the hard disk drive, thereby incorporating the hard disk drive as a component of a single drive (logical disk drive) (for example, see USPN 6,098,119).

Recently, enhancement of the performance of a personal computer is advancing, and on the other hand responsibility which allows the user to immediately use a personal computer when the user wishes to use it is strongly requested. In a personal computer having a function of receiving television broadcasting, for example, there are many requests for immediately activating a program which realizes the function of receiving television broadcasting, although not activating other sophisticated programs.

However, a sophisticated and multifunctional operating system cannot satisfy the request of responsibility. A configuration may be considered in which, in addition to plural hard disk drives constituting a RAID, a hard disk drive is newly added to establish an environment where programs that are requested to exert such responsibility are promptly activated. However, this configuration causes the cost to be raised, and the size and weight to be increased.
The above object is achieved by means of the computer of claim 1 and the disk management method of claim 9.
The dependent claims are directed to different advantageous aspects of the invention.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary perspective view of a notebook personal computer according to an embodiment in a state where a display unit thereof is opened;

Fig. 2 is an exemplary diagram showing a system configuration of the computer of the embodiment;

Fig. 3 is an exemplary diagram illustrating a manner in which the computer of the embodiment uses two HDDs;

Figs. 4A and 4B are exemplary diagrams illustrating a manner in which the computer of the embodiment contracts a first storage area that is a RAID configuring area to newly secure a second storage area that is a non-RAID area;

Fig. 5 is an exemplary view illustrating an example of a menu screen which is shown to the user by a recovery utility operating in the computer of the embodiment;

Figs. 6A and 6B are exemplary diagrams illustrating the manner in which the computer of the embodiment contracts the second storage area that is a non-RAID area to expand the first storage area that is a RAID configuring area;

Figs. 7A-7C are exemplary diagrams showing three states of the two HDDs which can be taken by the computer of the embodiment; and

Fig. 8 is an exemplary flowchart showing a disk management procedure executed by the computer of the embodiment in which a RAID area and a non-RAID area are concurrent with each other on the same disk device and these areas are expanded or contracted.

### DETAILED DESCRIPTION

Various embodiments according to the invention will be described hereinafter with reference to the accompanying drawings.

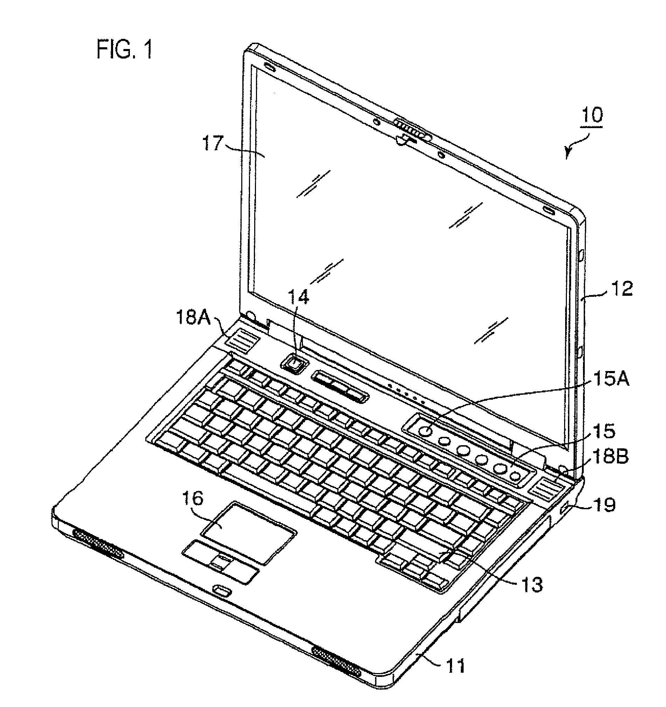

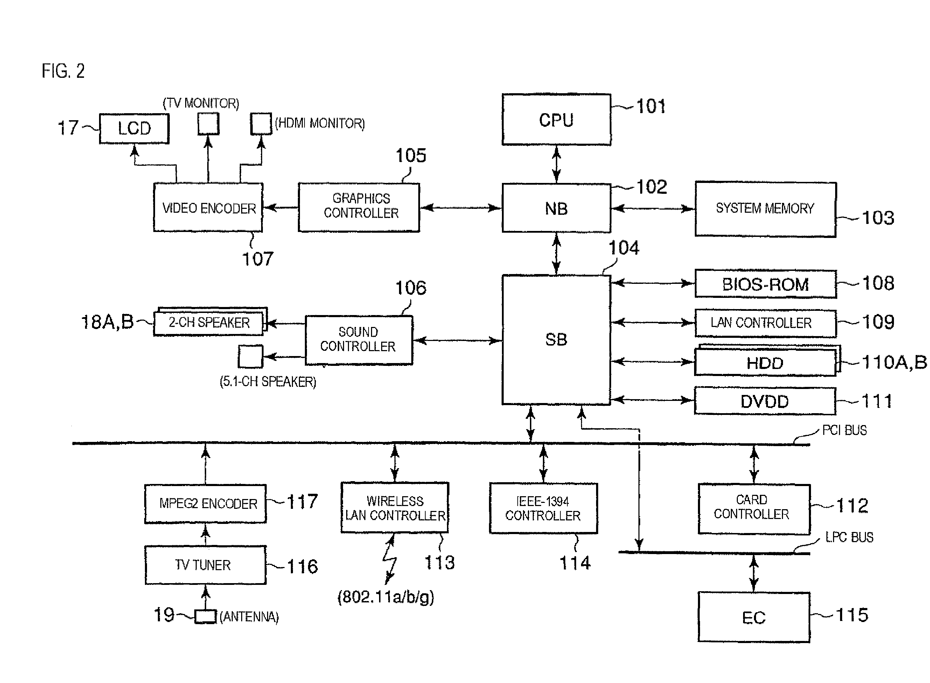

First, referring to Figs. 1 and 2, a configuration of a computer according to an embodiment of the invention will be described. The following description is made assuming that the computer of the invention is realized as a computer of a notebook type (notebook (laptop) computer). Fig. 1 is an exemplary perspective view of the notebook personal computer 10 in a state where a display unit thereof is opened.

As shown Fig. 1, the computer 10 is configured by a computer body 11 and the display unit 12. A display device configured by a TFT-LCD (Thin Film Transistor Liquid Crystal Display) 17 is incorporated into the display unit 12. The display screen of the LCD 17 is situated at a substantially middle of the display unit 12.

The display unit 12 is attached to the computer body 11 so as to be swingable between an open position and a closed position. The computer body 11 has a shallow box-like case. A keyboard 13, a power button 14 for powering on/off the computer 10, an input operation panel 15, a touch pad 16, and speakers 18A, 18B are arranged on the upper face of the case.

The input operation panel 15 is an input device for inputting an event corresponding to a pressed button into a system, and includes a plurality of buttons for directly activating a specific function. The button group includes a TV activation button 15A. The TV activation button 15A is a button for activating a TV function which reproduces and records data of a TV broadcast program. When the user depresses the button, a TV application program for executing the TV function is activated.

In the computer 10, in addition to a general-purpose main operating system, a subsidiary operating system dedicated to a process of AV (Audio Video) data is installed. The TV application program is a program which operates on the subsidiary operating system.

When the power button 14 is pressed by the user, the main operating system is activated. By contrast, when the TV activation button 15A is pressed by the user, the subsidiary operating system is activated instead of the main operating system, and subsequently the TV application program is automatically executed. The subsidiary operating system has only a minimum function of executing the AV function. Therefore, the time required to boot up the subsidiary operating system is very shorter than that required to boot up the main operating system. When the user simply depresses the TV activation button 15A, consequently, the user is allowed to immediately watch/record a TV broadcasting program. In order to receive the TV broadcasting, an antenna terminal 19 is disposed on the right side face of the computer body 11.

Next, referring to Fig. 2, the system configuration of the computer 10 will be described.

As shown Fig. 2, the computer 10 includes a CPU 101, a north bridge (NB) 102, a system memory 103, a south bridge (SB) 104, a graphics controller 105, a sound controller 106, a video enhancer 107, a BIOS-ROM 108, a LAN controller 109, two hard disk drives (HDDs) 110A, 110B, a DVD drive (DVDD) 111, a card controller 112, a wireless LAN controller 113, an TEEE-1394 controller 114, an embedded controller (EC) 115, a TV tuner 116, and an MPEG2 encoder 117.

The CPU 101 is a processor which controls the operation of the computer 10, and executes the main operating system/subsidiary operating system which are loaded from the HDDs 110A, 110B into the system memory 103, and various application programs such as the TV application program. The CPU 101 executes also a system BIOS (Basic Input Output System) which is stored in the BIOS-ROM 108. The system BIOS is a program for controlling the hardware.

The NB 102 is a bridge device which connects between a local bus of the CPU 101 and the SB 104. The NB 102 incorporates a memory controller which controls the access to the system memory 103, and has a function of executing communication with the graphics controller 105 via an AGP (Accelerated Graphics Port) bus, a serial bus according to the PCI express standard, or the like.

The graphics controller 105 is a display controller for controlling the LCD 17 which is used as a display monitor of the computer 10. Video data which are produced by the graphics controller 105 are sent to the video enhancer 107 to be subjected to a video process (image adjusting process) for enhancing the quality of the video data. The video data which are enhanced in quality by the video enhancer 107 may be transmitted by the video enhancer 107 to an external TV monitor or HDMI monitor via a connector disposed on the computer 10.

The SB 104 controls devices on an LPC (Low Pin Count) bus and a PCI (Peripheral Component Interconnect) bus. The SB 104 incorporates an IDE (Integrated Drive Electronics) controller for controlling the HDDs 110A, 110B and the DVDD 111, and has a function of executing communication with the sound controller 106.

The sound controller 106 is a device to control sound sources, and supplies audio data to be reproduced to the speakers 18A, 18B or a 5.1-channel speaker system connected via a connector.

The card controller 112 controls cards such as a PC card and an SD (Secure Digital) card. The wireless LAN controller 113 is a wireless communication device which executes wireless communication according to, for example, the IEEE 802.11 standard. The IEEE-1394 controller 114 executes communication with an external device via a serial bus according to the IEEE 1394 standard. The EC 115 is a one-chip microcomputer in which an embedded controller for managing a power control, and a keyboard controller for controlling the keyboard 12 and the touch pad 16 are integrated. The EC 115 has a function of powering on/off the computer 10 in accordance with a user's operation on the power button 14. Furthermore, the EC 115 can power on the computer 10 in accordance with a user's operation on the TV activation button 15A.

The TV tuner 116 is a tuner module which receives a TV broadcasting program, and receives a broadcast signal of a specific channel among TV broadcast signals supplied from the antenna terminal 19. The data of the broadcasting program received by the TV tuner 116 are sent to the MPEG2 encoder 117. The MPEG2 encoder 117 compression encodes the broadcasting program data by the encoding method according to the MPEG2 standard, to produce a program stream (PS) in which compression coded video and audio data are multiplexed. The program stream is decoded in a software manner by the TV application program.

In the thus configured computer 10, a RAID is configured with using the two HDDs 110A, 110B, thereby enhancing the fault tolerance of data. On the other hand, in response to depression of the TV activation button 15A, the computer 10 immediately enables to watch and record a TV broadcasting program as described above. Next, the mechanism which allows the computer 10 to concurrently realize both the functions will be described.

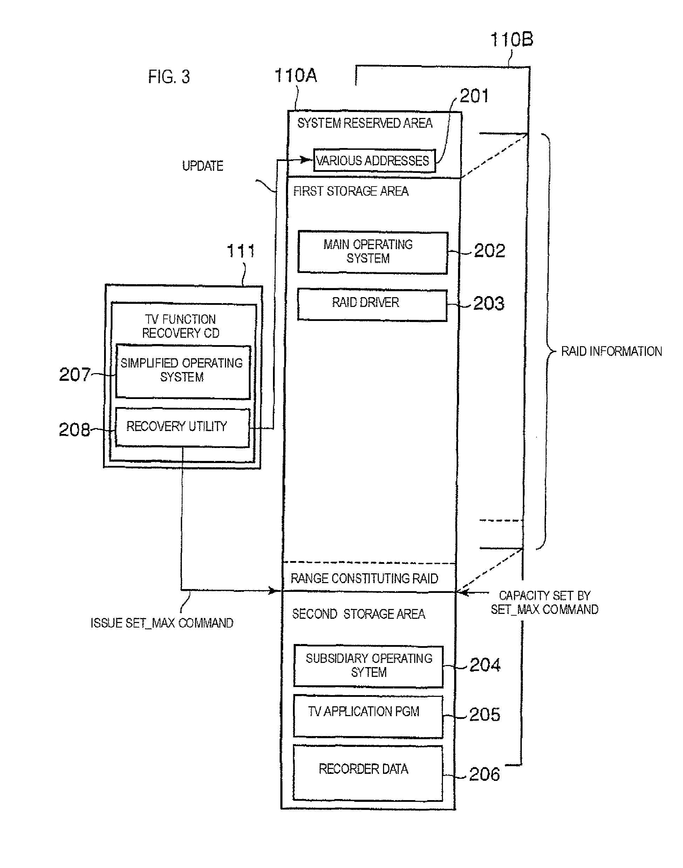

Fig. 3 is a diagram illustrating the manner in which the computer 10 uses the two HDDs 110A, 110B.

In the computer 10, as described above, a RAID is configured with using the two HDDs 110A, 110B in order to enhance the fault tolerance of data. In the computer 10, however, a RAID is not configured with using the whole area of the two HDDs 110A, 110B. As shown in Fig. 3, the area of each of the two HDDs 110A, 110B is partitioned into an first storage area which configures a RAID and an second storage area which does not cofigure a RAID.

The first storage area stores the main operating system 202, various programs which operate under control of the main operating system 202, and various data which are used by the programs. The programs include a RAID driver 203 which configures and manages a RAID. By contrast, the second storage area stores the subsidiary operating system 204, various programs which operate under control of the subsidiary operating system 204, and various data which are used by the programs. The programs include the TV application program 205, and the various data include recorded data 206 which are recorded by the TV application program 205.

In the computer 10, namely, high reliability is ensured by establishing an environment for the main operating system 202 in the first storage area in which a RAID is configured, without adding another HDD in addition to the HDDs 110A, 110B configuring a RAID, and high responsibility is ensured by establishing an environment for the subsidiary operating system 204 in the second storage area in which a RAID is not configured (which does not require participation by the RAID driver 203) .

The manner of partitioning each of the HDDs 110A, 110B into the first and second storage areas as shown in Fig. 3 will be described. In the computer 10, addition and deletion of the TV function to and from the system, i.e., install and uninstall of the subsidiary operating system 204 and the TV application program 205 can be performed by a recovery utility 208. The recovery utility 208 is stored together with a simplified operating system 207 on a TV function recovery CD, and activated following the simplified operating system from the DVDD 111 to execute various processes.

It is assumed that the TV function does not exist in the computer 10 and the whole area of the HDDs 110A, 110B is occupied by the first storage area. The case where the TV function is added to this situation will be considered. In this case, the TV function recovery CD is loaded into the DVDD 111, and the recovery utility 208 is activated under control of the simplified operating system 207.

The recovery utility 208 which has been activated in this way adds the TV function to the system in the following manner. First, RAID information indicative the type and the like of the RAID configured by the RAID driver 203 is referred, and consistency of the current RAID is checked on the basis of the RAID information. In this consistency check, basic items such as that whether both the two HDDs 110A, 110B are mounted or not are checked. When the RAID driver 203 configures a RAID, the RAID information is stored in the last part of the storage area configuring the RAID system. At this timing, therefore, the RAID information is in the last part of the whole area of the HDDs 110A, 110B.

When the consistency check is normally ended, the recovery utility 208 checks whether the first storage area is in a contractible state or not, in order to secure the second storage area in which the subsidiary operating system 204, the TV application program 205, and the recorded data 206 are to be stored. In this case, it is checked whether or not a space of the first storage area on which the second storage area is to be secured is in a free state, i.e. , a state where no partition exists. Since information such as whether the type of the RAID is mirroring or striping is known in the previous process of referring the RAID information, the address of a partition is converted to a physical address on the basis of the type, thereby checking the existence or absence of a partition.

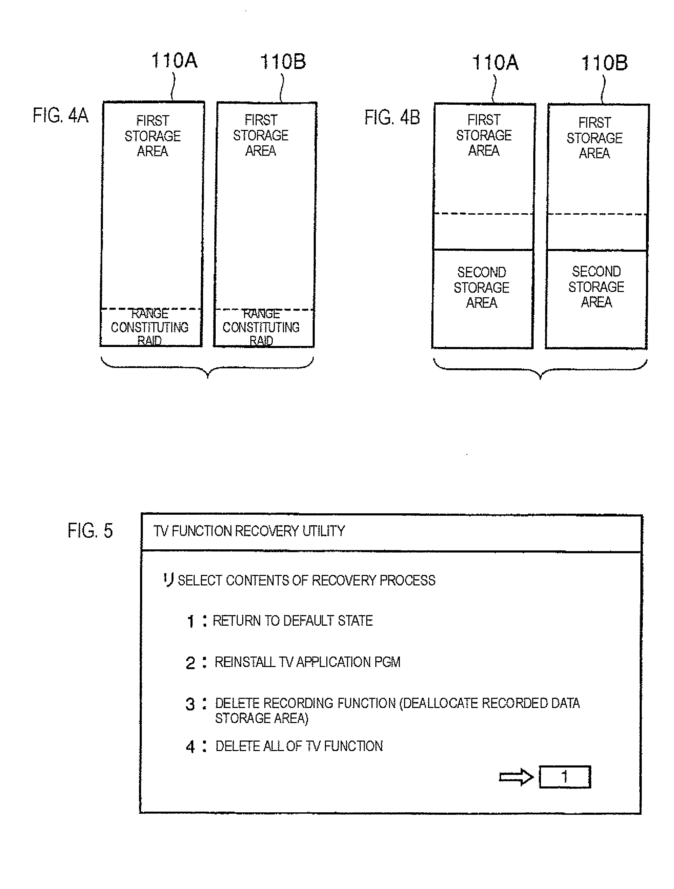

When no partition exists and the first storage area is in a contractible state, the recovery utility 208 edits the RAID information so as to correspond to a RAID configured by the contracted first storage area, and stores the edited RAID information in the last part of the contracted first storage area. Namely, as shown in Figs. 4A and 4B, the second storage area is newly secured by contracting the first storage area in which the RAID is configured.

When the first storage area is contracted and the second storage area is secured in this procedure, the recovery utility 208 issues a SET_MAX command in which the capacity of the contracted first storage area is used as a parameter, to each of the HDDs 110A, l10B. The SET_MAX command is used for setting so as to give the capacity which is given as a parameter, as an answer to an inquiry about the disk capacity from the main operating system 202. The issuance of the SET_MAX command can hide the second storage area from the main operating system 202 and all programs including the RAID driver 203 which operate under control of the operating system.

Thereafter, the recovery utility 208 installs the subsidiary operating system 204 and the TV application program 205 in the secured second storage area, and sets the system so that the subsidiary operating system 204 is activated when the TV activation button 15A is pressed.

Next, the manner of realizing the above-described TV function with using the thus secured second storage area will be described. As described above, when the second storage area is to be secured, the SET_MAX command is issued to each of the HDDs 110A, 110B in order to hide the second storage area from the environment for the main operating system 202. When no countermeasure is taken, also the subsidiary operating system 204 cannot access the second storage area. When the subsidiary operating system 204 is activated, therefore, a command for temporarily invalidating the setting due to the SET_MAX command is issued to each of the HDDs 110A, 110B. As a result, the subsidiary operating system 204 and all programs including the TV application program 205 which operate under control of the subsidiary operating system 204 can access the second storage area. The environment for the subsidiary operating system 204 can access also the first storage area constituting a RAID. The command for temporarily invalidating the setting due to the SET_MAX command is issued also by the recovery utility 208 when the utility is activated.

When the subsidiary operating system 204 and the TV application program 205 are installed, the recovery utility 208 stores the start address of the second storage area as one of various addresses 201 into a system reserved area that is previously reserved in the HDD 110A for the subsidiary operating system 204, and further stores the address of the storage location of the recorded data 206 as another one of the various addresses 201.

In activating the subsidiary operating system 204 (after the command for temporarily invalidating the setting due to the SET_MAX command is issued), the subsidiary operating system is activated on the basis of the address stored in the system reserved area, and subsequently the TV application program 205 is automatically activated. When recording or reproduction is performed, the TV application program 205 knows the storage location of the recorded data 206 on the basis of the address stored in the system reserved area.

In the computer 10, as a result, the areas of the HDDs 110A, 110B are partitioned into the first storage area which configures a RAID, and the second storage area which does not configure a RAID, establishes the environment for the main operating system 202 in which high reliability is requested, in the first storage area, and establishes the environment for the subsidiary operating system 204 in which high responsibility is requested.

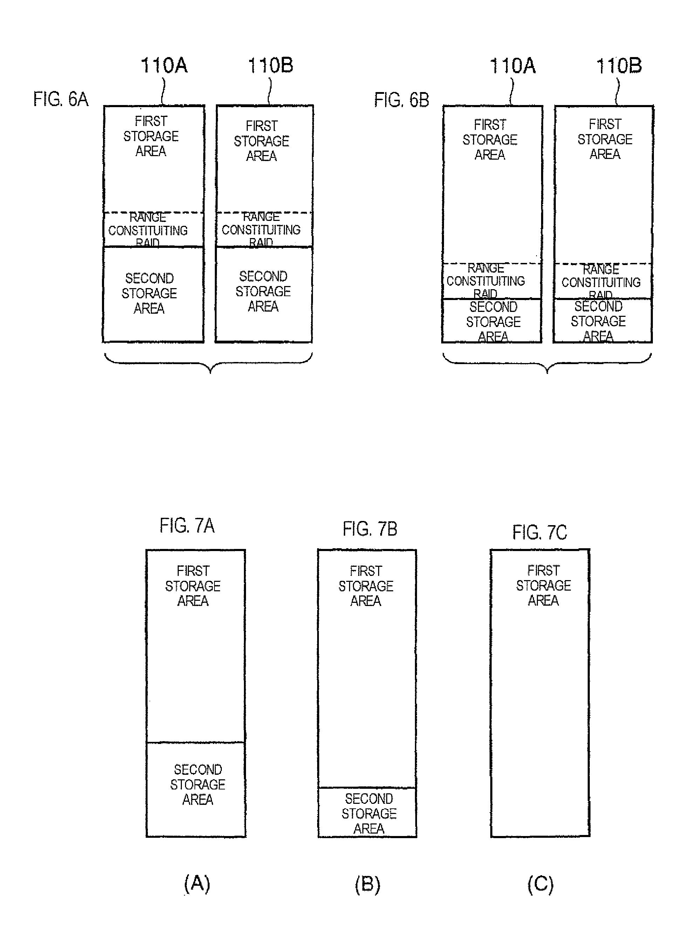

When the recovery utility 208 is activated, the recovery utility shows a menu screen such as shown in Fig. 5, to the user. In the menu screen, "1: Return to default state" means that the area of each of the HDDs 110A, 110B is set to the state shown in Fig. 3 where the first storage area is concurrent with the second storage area including the storage location of the recorded data 206. Furthermore, "2: Reinstall TV application PGM" means that only the TV application program 205 is replaced with a new one, "3: Delete recording function (deallocate recorded data storage area)" means that the TV function is restricted only to TV watching, and the first storage area is expanded by the degree corresponding to the storage area of the recorded data 206 which is in the second storage area and becomes unnecessary, and "4: Delete all of TV function" means that so-called uninstall of the TV function is executed to set the whole area of the HDDs 110A, 110B as the first storage area. When "3: Delete recording function (deallocate recorded data storage area)" is selected, for example, the recovery utility 208 contracts the second storage area which does not configure a RAID, and correspondingly expands the first storage area which configures a RAID as shown in Figs. 6A and 6B.

In the computer 10, as shown in Figs. 7A-7C, the areas of the HDDs 110A, 110B can be set to one of three states. A first state is a state where both TV watching and TV recording are enabled and the second storage area is secured to be wider (example shown in Fig. 7A). A second state is a state where only TV watching is enabled and the second storage area is secured to be narrower (example shown in Fig. 7B) . A third state is a state where the TV function is deleted and the second storage area is not secured (example shown in Fig. 7C). The recovery utility 208 performs the above-described procedure including edition and movement of RAID information to expand or contract the first storage area, thereby realizing the transfer among the three states of the first to the third states.

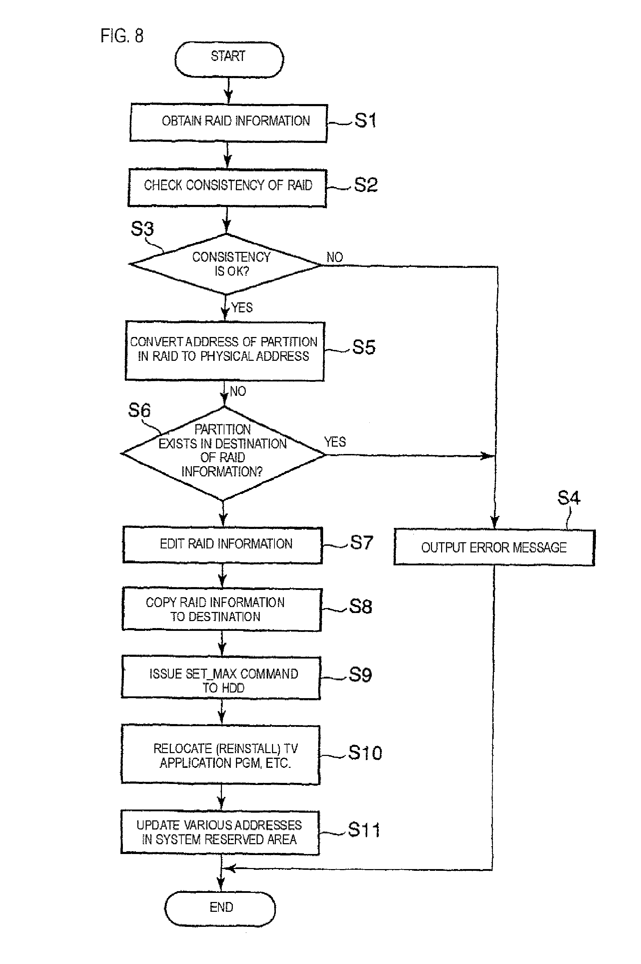

Fig. 8 is a flowchart showing the disk management procedure executed by the computer 10 in which a RAID area and a non-RAID area are concurrent with each other on the same disk device and these areas are expanded or contracted.

In order to check the configuration of the current RAID, the recovery utility 208 obtains RAID information stored in the last part of the RAID area (step S1), and consistency of the RAID is checked on the basis of the RAID information (step S2).

When a consistency error such as that one of the HDDs 110A, 1108 is not mounted is detected (NO in step S3), the recovery utility 208 outputs an error message informing the detection (step S4), and the process is completed. By contrast, when the consistency check is normally ended (YES in step S3), the recovery utility 208 converts the address of the partition to a physical address on the basis of the RAID information which has been previously obtained (step S5), and, with using the physical address, checks whether a partition exists in the destination of the RAID information or not (step S6).

When a partition exists (YES in step S6), the recovery utility 208 determines that a space in which a non-RAID area is be secured is in a free state, and outputs an error message informing the determination (step S4). Then, the process is completed. By contrast, when no partition exists (NO in step S6), the recovery utility 208 first edits the RAID information (step S7).

When this editing is completed, the recovery utility 208 copies the edited RAID information to the destination (step S8), and issues the SET_MAX command which disguises the area extending to the destination as the disk capacity (step S9). As required, the recovery utility 208 reinstalls the subsidiary operating system 204, the TV application program 205, and the like (step S10), and executes updating the various addresses 201 in the system reserved area in order to store the address of the reinstall destination and the like (step S11).

As described above, the computer 10 can use the areas of the two HDDs 110A, 110B with partitioning the areas into the RAID configuring area and the non-RAID area, and arbitrarily expand and contract these areas.

As described in detail with reference to the embodiment, there is provided a computer including: a plurality of hard disk drives; a RAID driver that configures a RAID system using the hard disk drives; and a disk managing unit that manages the hard disk drives by partitioning a storage area of each of the hard disk drives into a first storage area where the RAID system is configured under control of the RAID driver and a second storage area where the RAID system is unconfigured.

There is also provided a disk management method for a computer having a plurality of hard disk drives and a RAID driver that configures a RAID system using the hard disk drives, the disk management method including: partitioning a storage area of each of the hard disk drives into a first storage area where the RAID system is configured under control of the RAID driver and a second storage area where the RAID system is unconfigured.

According to the configurations described above, there is provided a computer and disk management method in which areas of plural hard disk drives can be used while being partitioned into an area configuring a RAID and an area not configuring a RAID.

It is to be understood that the invention is not limited to the specific embodiment described above and that the invention can be embodied with the components modified without departing from the spirit and scope of the invention. The invention can be embodied in various forms according to appropriate combinations of the components disclosed in the embodiment described above. For example, some components may be deleted from all components shown in the embodiment. Further, the components in different embodiments may be used appropriately in combination.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A computer comprising:
a plurality of hard disk drives;
a RAID driver that configures a RAID system using the hard disk drives; and
a disk managing unit that manages the hard disk drives by partitioning a storage area of each of the hard disk drives into a first storage area where the RAID system is configured under control of the RAID driver and a second storage area where the RAID system is unconfigured.

2. The computer according to claim 1, wherein the disk managing unit issues to the hard disk drives a command for setting the hard disk drives to reply a disk capacity smaller than an actual disk capacity in response to an inquiry from an operating system that performs resource management of an entire system of the computer including the hard disk drives, and causes the operating system to recognize a disk capacity of the first storage area as a disk capacity of the hard disk drives.

3. The computer according to claim 2, wherein the disk managing unit edits configuration information of the RAID system when the RAID driver configures the RAID system, the information being stored in a last part of the first storage area, and moves a storage location of the edited configuration information on the hard disk drives to expand or to contract the first storage area.

4. The computer according to claim 3, wherein, when the first storage area is expanded or contracted, the disk managing unit reissues the command for setting the hard disk drives to reply a disk capacity corresponding to the expanded or contracted first storage area in response to the inquiry from the operating system.

5. The computer according to claim 2, wherein the disk managing unit stores a subsidiary operating system that is different from the operating system into the second storage area of one of the hard disk drives, and
wherein the subsidiary operating system accesses to the second storage area of the hard disk drives by issuing a command for invalidating the command for setting the hard disk drives to reply a disk capacity smaller than an actual disk capacity in response to the inquiry from the operating system that performs resource management of the entire system of the computer.

6. The computer according to claim 5, wherein the disk managing unit stores a start address of the second storage area into a system reserved area that is previously reserved in the hard disk drive in which the subsidiary operating system is stored, and further stores a program that operates under control of the subsidiary operating system into the second storage area of the hard disk drive in which the subsidiary operating system is stored, and wherein the subsidiary operating system is activated on the basis of the address stored in the system reserved area, and the program is activated subsequently to the subsidiary operating system.

7. The computer according to claim 5, further comprising:
a first button for activating the operating system stored in the first storage area; and
a second button for activating the subsidiary operating system stored in the second storage area.

8. A computer comprising:
a plurality of hard disk drives that have a storage area being partitioned into a first storage area where a RAID system is configured and a second storage area where the RAID system is unconfigured;
a first operating system that is stored in the first storage area; and
a second operating system that is stored in the second storage area, the second operating system having function more simple than the first operating system and requiring a shorter time for activation than the first operating system.

9. A disk management method for a computer having a plurality of hard disk drives and a RAID driver that configures a RAID system using the hard disk drives, the disk management method comprising:
partitioning a storage area of each of the hard disk drives into a first storage area where the RAID system is configured under control of the RAID driver and a second storage area where the RAID system is unconfigured.

10. The disk management method according to claim 9, further comprising issuing to the hard disk drives a command for setting the hard disk drives to reply a disk capacity smaller than an actual disk capacity in response to an inquiry from an operating system that performs resource management of an entire system of the computer including the hard disk drives, to cause the operating system to recognize a disk capacity of the first storage area as a disk capacity of the hard disk drives.

11. The disk management method according to claim 10, further comprising performing expansion or contraction of the first storage area by editing configuration information of the RAID system when the RAID driver configures the RAID system, the information being stored in a last part of the first storage area, and moving a storage location of the edited configuration information on the hard disk drives.

12. The disk management method according to claim 11, further comprising reissuing the command for setting the hard disk drives to reply a disk capacity corresponding to the expanded or contracted first storage area in response to the inquiry from the operating system, when the first storage area is expanded or contracted.
